# EUROPÄISCHE PATENTSCHRIFT

(11) **EP 0 943 499 B1**
(45) Veröffentlichungstag und Bekanntmachung des Hinweises auf die Patenterteilung: **02.05.2002**
(21) Anmeldenummer: 99102515.6
(22) Anmeldetag: 10.02.1999
(51) Int. Cl.: B60R 21/16

(54) **Airbag mit Fangband**
Airbag with restraining band
Airbag avec bande de retenue

(30) Priorität: 17.03.1998 DE 19811616
(43) Veröffentlichungstag der Anmeldung: 22.09.1999
(73) Patentinhaber: Bayerische Motoren Werke Aktiengesellschaft, 80788 München (DE)
(72) Erfinder: Rank, Johann, 85301 Suenzhausen (DE); Foith, Petra, 83236 Übersee (DE)

(56) Entgegenhaltungen:
- EP-A- 0 599 377
- DE-A- 4 334 606
- DE-U- 29 707 162
- DE-U- 29 805 217
- GB-A- 2 299 550

## Beschreibung

Die Erfindung betrifft einen Airbag mit mindestens einem Fangband, das an der Innenseite des Airbags und im eingebauten Zustand an einem Teil des Fahrzeugs angreift, um die Form des aufgeblasenen Airbags zu überwachen.

Ein mit einem solchen Airbag ausgerüstetes Kraftfahrzeug ist mit einem Sensor versehen, der Verzögerungs- und Beschleunigungskräfte analysiert. Wenn das Fahrzeug bei einer Kollision oder aus einem anderen Grund extrem stark verzögert oder beschleunigt wird, dann wird der Gasgenerator von dem Sensor ausgelöst oder gezündet. Das in dem Gasgenerator gespeicherte oder durch eine chemische Reaktion erzeugte Gas strömt unter hohem Druck durch die Gasaustrittsöffnung in das Innere des gefalteten Airbags ein, um diesen aufzublasen. Wenn das Gas in den gefalteten Airbag einströmt, wird das Airbagpaket überwiegend in Richtung des zu schützenden Insassen beschleunigt. Der Insasse kann daher durch das sich entfaltende Airbagpaket belastet werden. Um eine zusätzliche Belastung des Insassen durch das sich entfaltende Airbagpaket zu vermeiden, wurde bereits vorgeschlagen, im Inneren des Airbags Fangbänder anzuordnen, die seine Ausdehnung begrenzen. Durch die Länge der Fangbänder ist die Form des aufgeblasenen Airbags in einem gewissen Maß festgelegt. Dadurch kann verhindert werden, dass bei der Entfaltung des Airbags zu viel Energie auf den Insassen übertragen wird. Dies gilt allerdings nur dann, wenn der Fahrzeugsitz in einem bestimmten Bereich angeordnet ist und wenn der Insasse von durchschnittlichem Körperwuchs ist. Bei einem sehr kleinen Insassen besteht beispielsweise die Möglichkeit, dass dieser seinen Sitz extrem weit nach vorne verstellt, so dass bei einem Unfall der Airbag an einem Körperteil des Insassen zur Anlage gelangt, bevor die Fangbänder gestrafft sind. In einem solchen Fall sind die Fangbänder jedoch wirkungslos.

Aus der DE 297 07 162 U1 ist auch bereits ein Airbag der eingangs genannten Art bekannt, bei dem das Fangband so ausgebildet ist, dass sich der Airbag mehrstufig entfaltet. Zu diesem Zweck ist vorgesehen, dass das Fangband eine durch mindestens eine Reißnaht begrenzte Länge für die erste Stufe der Entfaltung des Airbags aufweist, und dass das insassenseitige Ende des Fangbandes an einer Stelle des Airbags befestigt ist, die sich in der ersten Stufe der Entfaltung im Bereich des Kopfes des Insassen befindet, falls sich dieser extrem weit nach vorne beugt. Die Reißnaht ist so ausgebildet, dass sie bei erhöhtem Innendruck des Airbags in einer zweiten Stufe der Entfaltung aufreißbar ist. Da das Fangband in der ersten und in der zweiten Stufe der Entfaltung des Airbags eine definierte Länge hat, ist eine optimale Anpassung an die Position des zu schützenden Insassen jedoch nicht möglich. Außerdem führt das Aufreißen des Fangbandes zu einer gewissen Verzögerung des Entfaltungsvorgangs des Airbags. Die zweistufige Entfaltung des Airbags und die damit verbundene Zeitverzögerung ist aber nicht gerechtfertigt, wenn sich der Kopf des Fahrers in einem ausreichenden Abstand von dem zusammengefalteten Airbag befindet.

Der Erfindung liegt die Aufgabe zugrunde, den gattungsgemäßen Airbag dahingehend zu verbessern, dass dessen Form im aufgeblasenen Zustand zur Anpassung an die Position des zu schützenden Insassen beeinflußbar ist.

Erfindungsgemäß wird diese Aufgabe mit einem gattungsgemäßen Airbag gelöst, der dadurch gekennzeichnet ist, dass das Fangband auf eine Spule aufgewickelt ist, die am Fahrzeug befestigbar ist, und dass die Länge des Fangbandes zwischen den Angriffspunkten am Airbag und an der Spule variabel ist und selbständig an die Position des zu schützenden Insassen angepaßt werden kann.

Durch diese Maßnahme kann die Form des Airbags im aufgeblasenen Zustand in Abhängigkeit von der Position des Insassen beeinflußt werden. Der Airbag kann unbehindert und daher ohne Verzögerung aufgeblasen werden. Gleichwohl wird verhindert, dass bei einem Unfall von dem aufgeblasenen Airbag eine übermäßige Energie auf den Insassen übertragen wird.

Der erfinderische Grundgedanke kann in der Weise verwirklicht werden, dass der Spule eine Bremseinrichtung zugeordnet ist, die wirksam wird, sobald die Abziehgeschwindigkeit des Fangbandes abfällt. Zur Ermittlung der Abziehgeschwindigkeit des Fangbandes kann eine optische oder eine mechanische Meßeinrichtung vorgesehen sein.

Der erfinderische Grundgedanke kann aber auch in der Weise verwirklicht werden, dass das Fahrzeug mit die Position des Insassen ermittelnden Sensoren ausgerüstet ist und dass der Spule ein Antrieb zugeordnet ist, der in Abhängigkeit von den Meßwerten der Sensoren betätigbar ist, um die wirksame Länge des Fangbandes einzustellen.

Zwei Ausführungsbeispiele der Erfindung sind in den Zeichnungen dargestellt und werden nachfolgend näher erläutert. Es zeigen:
Fig. 1 eine schematische Darstellung einer ersten Ausführungsform eines Airbags während der Entfaltung,
Fig. 2 eine Darstellung ähnlich wie Fig. 1, wobei der Airbag an einem Körperteil eines Insassen zur Anlage gelangt ist,
Fig. 3a, b und c Darstellungen zur Veranschaulichung des zeitlichen Ablaufs des Entfaltungsvorgangs der ersten Ausführungsform eines Airbags, und
Fig. 4a und b Darstellungen zur Veranschaulichung der Wirkungsweise einer zweiten Ausführungsform eines Airbags.

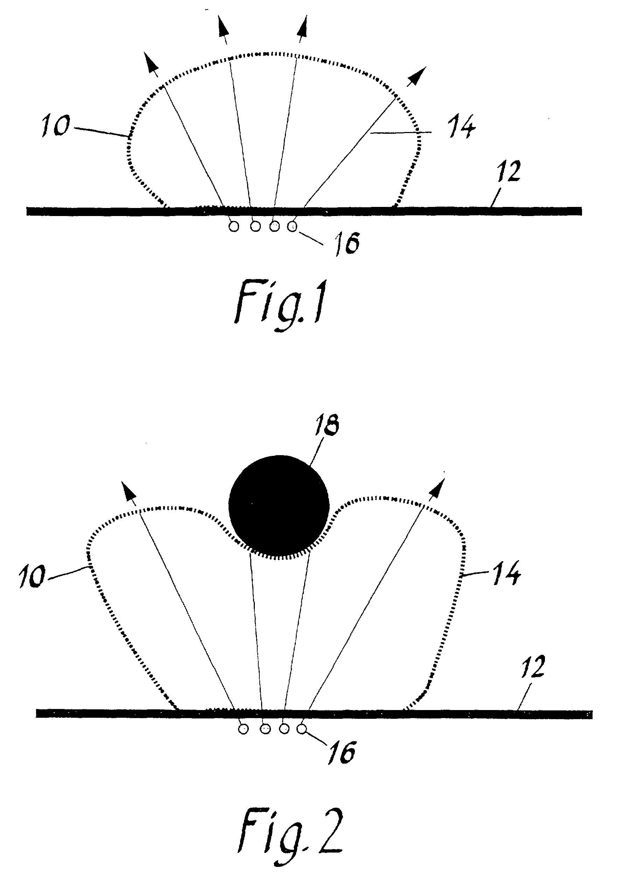

In Fig. 1 ist ein Airbag 10 gezeigt, der sich im Anfangsstadium der Entfaltung befindet. Der Airbag 10 stützt sich an einem Fahrzeugteil 12, beispielsweise der Instrumententafel, ab. An der Innenseite des Airbags 10 sind vier Fangbänder 14 befestigt, die jeweils auf eine am Fahrzeugteil 12 befestigte Spule 16 aufgewickelt sind. Die Fangbänder haben eine bestimmte Länge, wodurch die Form des aufgeblasenen Airbags in einem gewissen Maß festgelegt ist. Jeder der vier Spulen 16 ist eine (nicht gezeigte) Bremseinrichtung zugeordnet, die wirksam wird, sobald die Abziehgeschwindigkeit des betreffenden Fangbandes 14 abfällt. Zu diesem Zweck kann eine optische oder mechanische Meßeinrichtung zur Ermittlung der Abziehgeschwindigkeit des Fangbandes 14 von der jeweiligen Spule 16 vorgesehen sein. Der Spule 16 kann beispielsweise eine durch die Fliehkraft gesteuerte Bremseinrichtung zugeordnet sein, die wirksam wird, sobald die Drehzahl der Spule nach einer anfänglichen Beschleunigung plötzlich abnimmt.

Wenn der Airbag 10 bei seiner Entfaltung an einem Gegenstand, beispielsweise einem Körperteil 18 eines Insassen zur Anlage gelangt, dann wird dieser Bereich des Airbags an einer weiteren Entfaltung gehindert. Das bedeutet, daß die an diesem Bereich des Airbags 10 angreifenden Fangbänder 14 nicht mehr oder nur mit wesentlich geringerer Geschwindigkeit von den zugeordneten Spulen 16 abgezogen werden. Diese plötzliche Verringerung der Abziehgeschwindigkeit der Fangbänder 14 wird von der entsprechenden Meßeinrichtung ermittelt und die der zugehörigen Spule 16 zugeordnete Bremseinrichtung wird aktiviert, um die Spule zu blockieren. Derjenige Bereich des Airbags 10, der an dem Körperteil 18 anliegt, kann sich daher nicht weiter vom Fahrzeugteil 12 entfernen, weil ihn die daran angreifenden Fangbänder 14 zurückhalten. Im Gegensatz dazu können sich die beiden äußeren Bereiche des Airbags 10 weiter entfalten bzw. vom Fahrzeugteil 12 entfernen, weil die daran befestigten Fangbänder 14 von den zugeordneten Spulen 16 bis zu der vorgegebenen Länge ablaufen können. In Fig. 2 sind die beiden äußeren Fangbänder 14 mit ihrer vollen Länge von den zugehörigen Spulen 16 abgezogen.

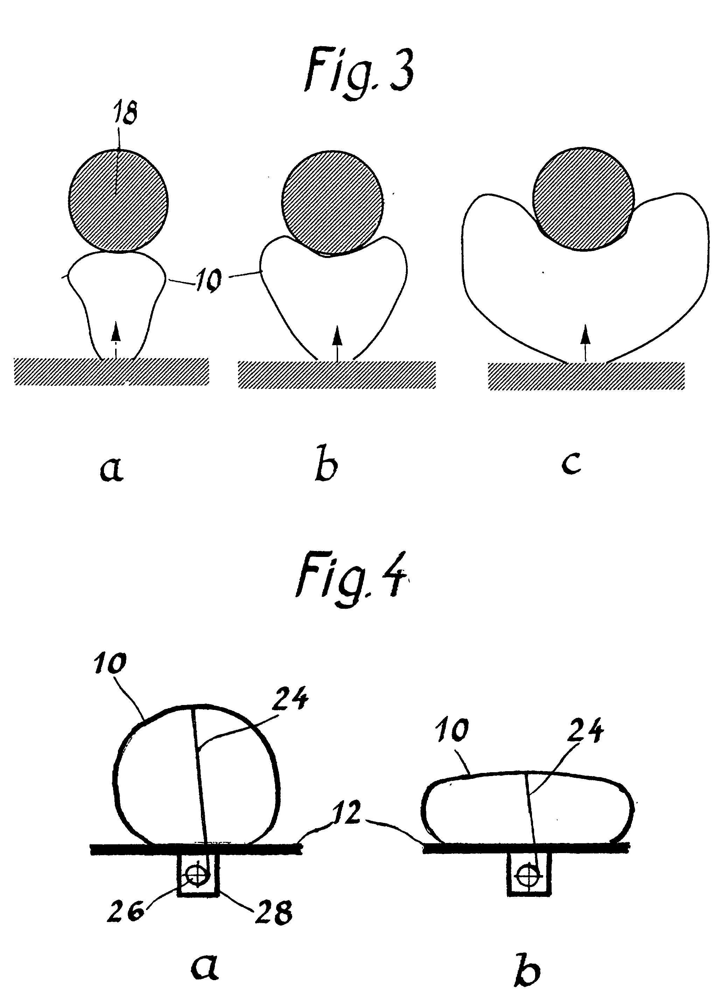

In den Fig. 3a, b und c ist der zeitliche Ablauf des Entfaltungsvorgangs der vorstehend beschriebenen Ausführungsform eines Airbags dargestellt. Mit dem Pfeil ist der Gasstrom bezeichnet, durch den der Airbag 10 bei einem Unfall aufgeblasen wird. Sobald der Airbag 10 an einem Körperteil 18 eines Insassen zur Anlage gelangt, wird dieser Bereich des Airbags unter der Wirkung der daran angreifenden Fangbänder bzw. des daran angreifenden Abschnittes der Fangbänder zurückgehalten, während die beiden außenliegenden Bereiche des Airbags sich zunächst ungehindert weiter entfalten können, bis auch die an diesen Bereichen angreifenden Fangbänder oder Abschnitte der Fangbänder straff sind.

Bei der in den Fig. 4a und b gezeigten zweiten Ausführungsform ist an der Innenseite des Airbags 10 ein Fangband 24 befestigt, das auf eine Spule 26 aufgewickelt ist. Die Spule 26 sitzt auf der Abtriebswelle eines an einem Fahrzeugteil 12 befestigten Elektromotors 28, bei dem es sich beispielsweise um einen Schrittschaltmotor handeln kann. Das Fahrzeug ist mit (nicht gezeigten) Sensoren ausgerüstet, welche die Stellung der Sitze ermitteln. Die Meßwerte dieser Sensoren lassen Rückschlüsse auf den Abstand des jeweiligen Insassen von dem zugeordneten Airbag zu. Zusätzlich können auch Sensoren vorgesehen sein, welche auf das Gewicht der Insassen ansprechen. Die Kombination der Meßwerte der auf die Stellung des Sitzes und auf das Gewicht des Insassen ansprechenden Sensoren läßt noch genauere Rückschlüsse auf den Abstand zwischen den Insassen und dem den Airbag aufnehmenden Fahrzeugteil zu. Bei gleicher Sitzposition wird dieser Abstand bei einem leichten Insassen größer sein als bei einem schweren Insassen gleicher Körpergröße. Es können auch Sensoren (optisch, kapazitativ, Ultraschall, aktives und passives Infrarot) vorgesehen sein, welche die Position des Insassen und damit den Abstand zu dem den Airbag aufnehmenden Fahrzeugteil ermitteln.

Die von den Sensoren ermittelten Meßwerte werden in einen (nicht gezeigten) vorprogrammierten Rechner eingegeben. Aufgrund der empfangenen Meßwerte kalkuliert der Rechner den Abstand zwischen dem Insassen und dem den Airbag aufnehmenden Fahrzeugteil. Der Rechner steuert den Elektromotor 28, so daß dieser das Fangband 24 so weit aufwickelt, daß nur eine dem kalkulierten Abstand entsprechende wirksame Länge verbleibt. Diese Anpassung der wirksamen Länge des Fangbandes 24 kann entweder dauerhaft erfolgen, nachdem der Insasse Platz genommen und die Sitzposition entsprechend seinen Wünschen eingestellt hat. Bei einem entsprechend ausgebildeten Sensor, beispielsweise einem optischen Sensor, kann die Einstellung der wirksamen Länge des Fangbandes aber auch kontinuierlich durchgeführt werden. In diesem Fall wird die wirksame Länge des Fangbandes laufend nachreguliert, sobald der Insasse seine Position verändert, beispielsweise sich nach vorne beugt.

In den Fig. 4a und b ist der Airbag 10 im aufgeblasenen Zustand gezeigt. Dabei veranschaulicht Fig. 4a den Fall, wo der Rechner aufgrund der von den Sensoren ermittelten Meßwerte einen großen Abstand zwischen dem Insassen und dem Fahrzeugteil 12 kalkuliert hat. Von dem Elektromotor 28 wurde deshalb nur eine geringe Länge des Fangbandes 24 auf die Spule 26 aufgewickelt. Fig. 6b zeigt hingegen den Fall, wo der Rechner aufgrund der von den Sensoren ermittelten Meßwerte einen geringen Abstand des Insassen von dem Fahrzeugteil 12 kalkuliert hat. Es wurde deshalb von dem Elektromotor 28 eine größere Länge des Fangbandes 24 auf die Spule 26 aufgewickelt, so daß dessen wirksame Länge gegenüber Fig. 4a verkürzt wurde. Beim Aufblasen des Airbags 10 wird dieser demzufolge von dem Fangband 24 rechtzeitig zurückgehalten, bevor er auf den Insassen übermäßige Kräfte ausüben kann.

## Patentansprüche

1. Airbag mit mindestens einem Fangband, das an der Innenseite des Airbags und im eingebauten Zustand an einem Teil des Fahrzeugs angreift, um die Form des aufgeblasenen Airbags zu überwachen, **dadurch gekennzeichnet, daß** das Fangband (14) auf eine Spule (16) aufgewickelt ist, die am Fahrzeug (12) befestigbar ist, und daß die Länge des Fangbandes (14; 24) zwischen den Angriffspunkten am Airbag (10) und an der Spule (16) variabel ist und selbständig an die Position des zu schützenden Insassen angepaßt werden kann.

2. Airbag nach Anspruch 1, **dadurch gekennzeichnet, daß** der Spule (16) eine Bremseinrichtung zugeordnet ist, die wirksam wird, sobald die Abziehgeschwindigkeit des Fangbandes (14) abfällt.

3. Airbag nach Anspruch 2, **gekennzeichnet durch** eine optische Meßeinrichtung zur Ermittlung der Abziehgeschwindigkeit des Fangbandes.

4. Airbag nach Anspruch 2, **gekennzeichnet durch** eine mechanische Meßeinrichtung zur Ermittlung der Abziehgeschwindigkeit des Fangbandes.

5. Airbag nach Anspruch 1, **dadurch gekennzeichnet, daß** dann, wenn das Fahrzeug mit die Position des Insassen ermittelnden Sensoren ausgerüstet ist, der Spule (26) ein Antrieb (28) zugeordnet ist, der in Abhängigkeit von den Meßwerten der Sensoren betätigbar ist, um die wirksame Länge des Fangbandes (24) einzustellen.

## Claims

1. An airbag comprising at least one catch strap which engages the inside of the airbag and also engages a part of the vehicle when installed, in order to control the shape of the airbag when inflated, **characterised in that** the catch strap (14) is wound on to a coil (16) which can be fastened to the vehicle (12), and the length of the catch strap (14; 24) between the points of engagement on the airbag (10) and on the coil (16) is variable and can be automatically adapted to the position of the occupant to be protected.

2. An airbag according to claim 1, **characterised in that** the coil (16) is associated with a brake means which operates as soon as the drawing-off speed of the catch strap (14) decreases.

3. An airbag according to claim 2, **characterised by** an optical measuring means for determining the speed with which the catch strap is drawn off.

4. An airbag according to claim 2, **characterised by** a mechanical means for determining the speed with which the catch strap is drawn off.

5. An airbag according to claim 1, **characterised in that** when the vehicle is equipped with sensors for determining the position of the occupant, the coil (26) is associated with a drive (28) which is actuated in dependence on the measurements by the sensors so as to adjust the effective length of the catch strap (24).

## Revendications

1. Airbag équipé, pour contrôler sa forme quand il est gonflé, d'au moins une bande de retenue en prise avec la face interne de l'airbag et, à l'état rentré, avec une partie du véhicule,
**caractérisé en ce que**
la bande de retenue (14) est enroulée sur une bobine (16) qui peut être fixée au véhicule (12) et la longueur de cette bande (14 ; 24) comprise entre les points d'attache à l'airbag (10) et à la bobine (16) peut varier et être ajustée automatiquement à la position de l'occupant à protéger.

2. Airbag selon la revendication 1,
**caractérisé en ce que**
la bobine (16) est associée à un dispositif de freinage qui intervient dès que la vitesse de tirage de la bande de retenue (14) s'effondre.

3. Airbag selon la revendication 2,
**caractérisé en ce que**
un dispositif optique de mesure détermine la vitesse de tirage de la bande de retenue.

4. Airbag selon la revendication 2,
**caractérisé en ce que**
un dispositif mécanique de mesure détermine la vitesse de tirage de la bande de retenue.

5. Airbag selon la revendication 1,
**caractérisé en ce que**
si le véhicule est équipé de capteurs donnant la position de l'occupant, à la bobine (26) est associé un entraîneur (28) qui peut être actionné en fonction des valeurs mesurées par les capteurs, de manière à régler la longueur active de la bande de retenue (24).
